# EUROPEAN PATENT SPECIFICATION

(11) **EP 2 498 519 B1**
(45) Date of publication and mention of the grant of the patent: **25.12.2019**
(21) Application number: 10827916.7
(22) Date of filing: 04.11.2010
(51) Int. Cl.: H04W 4/02, H04W 4/20, G01S 5/02, H04W 80/08, H04L 29/08, H04W 64/00

(54) **LOCATION METHOD, APPARATUS AND SYSTEM**
LOKALISIERUNGSVERFAHREN, VORRICHTUNG UND -SYSTEM
PROCEDE, APPAREIL ET SYSTEME DE LOCALISATION

(30) Priority: 05.11.2009 CN 200910237241
(43) Date of publication of application: 12.09.2012
(73) Proprietor: CHINA ACADEMY OF TELECOMMUNICATIONS TECHNOLOGY, Haidian District, Beijing 100191 (CN)
(72) Inventor: ZHANG, Dajun, Beijing 100083 (CN); FANG, Jiayi, Beijing 100083 (CN); QUAN, Haiyang, Beijing 100083 (CN)
(74) Representative: Lantos, Mihaly
(86) International application number: PCT/CN2010/078415
(87) International publication number: WO 2011/054302

(56) References cited:
- EP-A1- 2 547 127
- WO-A1-2007/002303
- CN-A- 101 217 570
- CN-A- 101 415 171
- CN-A- 101 521 871
- US-A1- 2010 041 418
- "3rd Generation Partnership Project; Technical Specification Group Radio Access Network; Evolved Universal Terrestrial Radio Access (E-UTRA); Stage 2 functional specification of User Equipment (UE) positioning in E-UTRAN (Release 9)", 3GPP STANDARD; 3GPP TS 36.305, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V1.1.2, 5 October 2009 (2009-10-05), pages 1-55, XP050769424, [retrieved on 2009-10-05]
- "3rd Generation Partnership Project; Technical Specification Group Core Network and Terminals Location Services (LCS); LCS Application Protocol (LCS-AP) between the MME and E-SMLC; SLs interface (Release 9)", 3GPP STANDARD; 3GPP TS 29.171, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.3.0, 24 October 2009 (2009-10-24), pages 1-33, XP050400391, [retrieved on 2009-10-24]
- ERICSSON ET AL: "Pseudo-CR on IE definitions for SLs", 3GPP DRAFT; C4-093230-IE-DEFINITIONS-29171, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Phoenix; 20091012, 12 October 2009 (2009-10-12), XP050386861, [retrieved on 2009-10-18]
- "3rd Generation Partnership Project; Technical Specification Group Services and System Aspects; Functional stage 2 description of Location Services (LCS) (Release 9)", 3GPP STANDARD; 3GPP TS 23.271, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 1 June 2009 (2009-06-01), pages 1-164, XP050363508,
- "3rd Generation Partnership Project; Technical Specification Group Services and System Aspects; Evaluation of LCS Control Plane Solutions for EPS (Release 9)", 3GPP STANDARD; 3GPP TR 23.891, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V.1.0.0, 1 March 2009 (2009-03-01), pages 1-64, XP050364141,
- NTT DOCOMO ET AL: "Clarification on Session Identifier and LPP, LPPa routing mechanism", 3GPP DRAFT; R2-096528_LPP ROUTING AND TRANSPORT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050391108, [retrieved on 2009-11-02]
- ALCATEL-LUCENT ET AL: "Alignment of LCS routing identifiers", 3GPP DRAFT; S2-101620 (WAS 1613 1399+1147) 23.271 LCS ROUTING IDS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20100222, 2 March 2010 (2010-03-02), XP050434165, [retrieved on 2010-03-02]

## Description

### TECHNICAL FIELD

The present disclosure relates generally to communication technology, and, more particularly, to a locating method, apparatus and system.

### BACKGROUND

The mobile locating service is the service based on the locating of UE (User Equipment), including the service of emergency assistance and so on. At present, the mobile locating includes Control-Plane Locating and Secure User-Plane Locating; the Control-Plane Locating refers to the signaling link in whose processing of locating the E-UTRAN (Evolved Universal Terrestrial Radio Access Network) is needed, MME (Mobility Management Entity) transmitting locating request to E-SMLC (Enhanced Serving Mobile Locating Center), so as to trigger locating process. Once completed locating operation, E-SMLC returns the result of locating to MME, E-SMLC, MME, eNodeB and UE may involve in the process of locating.

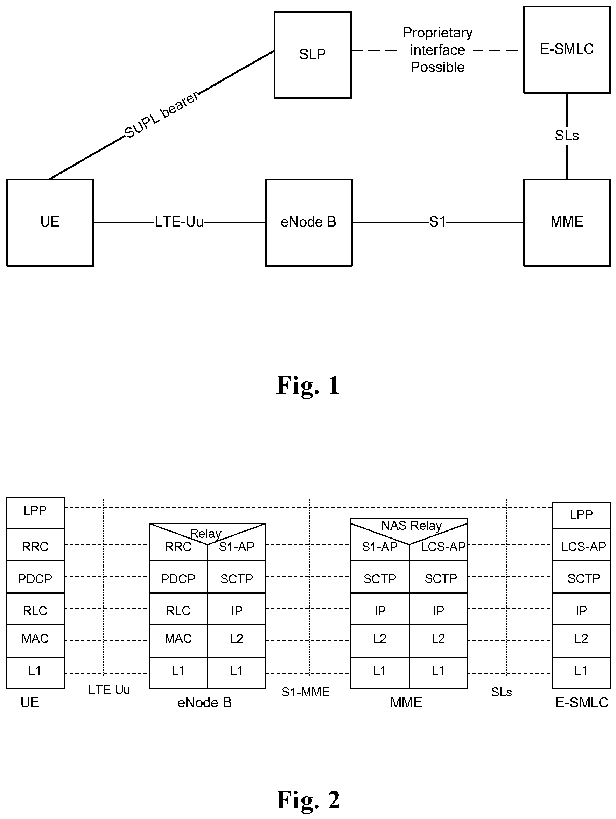

As is shown in FIG. 1, the schematic diagram of locating framework that relates to E-UTRAN in present technology, including E-SMLC, MME, eNodeB and UE, the E-SMLC is used for transferring the locating requirement requested by client into corresponding E-UTRAN measuring parameters, and selecting measuring method, estimating of the final result and accuracy on returned locating; the MME providing with mobility management to LCS (Location Services), including reporting the movement of UE to E-SMLC/GMLC (Gateway Mobile Location Center); the eNodeB providing with the measuring results that relates to locating service to E-SMLC, and transmitting supporting information which is needed for locating service; the UE providing with the measuring results that relates to locating service to E-SMLC.

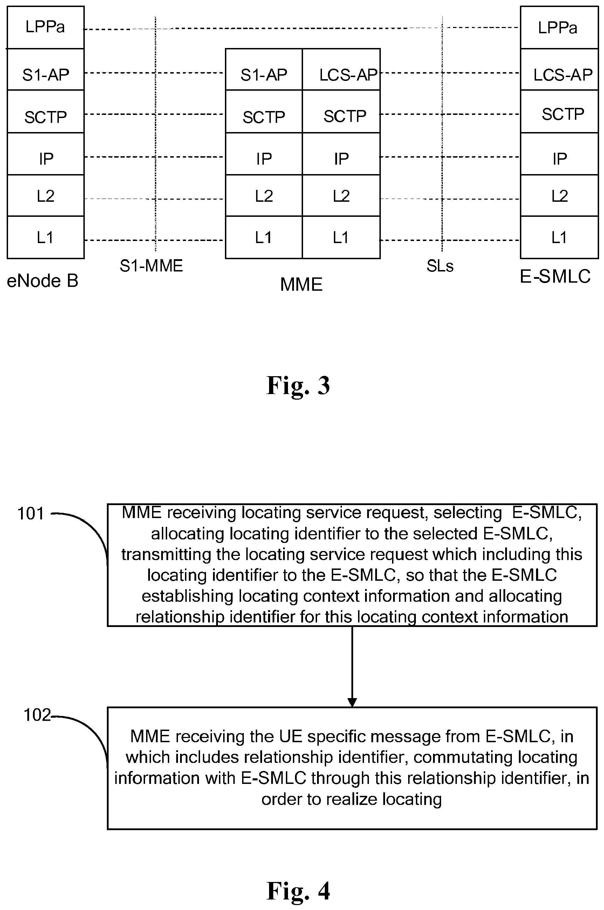

In addition, the relationship between the interfaces of LPP (LTE Positioning Protocol) stack and the relationship between the interfaces of LPPa (LTE Positioning Protocol Annex) stack is as shown in FIG.2 and FIG.3, separately. After being received locating service request, MME transmitting the locating service request to a selected E-SMLC. As a locating center, the E-SMLC is responsible for processing the locating needs from MME, selecting a appropriate locating method according to corresponding property such as QoS (Quality of Service). At present, the supportable locating method including: E-CID (Enhanced Cell-ID), OTDOA (Observed Time Difference Of Arrival), A-GNSS (Advanced Global Navigation Satellite System) and so on. For the locating method calculated by network side, transmitting LPPa messages between E-SMLC and eNodeB is needed to complete the locating requirement of client; for the locating method that supported by client, transmitting LPP messages between E-SMLC and UE is needed to complete the locating requirement of client.

A technical specification 3GPP TS 36.305 discloses stage 2 functional specification of User Equipment positioning in E-UTRAN.

A technical specification 3GPP TS 29.171 discloses LCS Application Protocol (LCS-AP) between the MME and E-SMLC.

A technical specification 3GPP TS 29.171 0.2.0 discloses Pseudo-CR on IE definitions for SLs.

A technical specification 3GPP TS 23.271 discloses Functional stage 2 description of Location Services (LCS).

A technical specification 3GPP TR 23.891 discloses Evaluation of LCS Control Plane Solutions for EPS.

NTT DOCOMO ET AL: "Clarification on Session Identifier and LPP, LPPa routing mechanism" (2009-11-09) clarifies the necessary identification and the possible routing option for LPP and LPPa message transport via the relevant interfaces (Uu, S1 and SLs).

ALCATEL-LUCENT ET AL: "Alignment of LCS routing identifiers" (2010-03-02) discloses LCS signalling procedures applicable to E-UTRAN.

EP2547127A1 (Date of publication: 16.01.2013; Date of filing: 22.06.2010; Dates of Priorities: 22.06.2009 US 219376 P, 24.08.2009 US236501P, 21.06.2010 US 819815) discloses Transport of LCS-Related Messages for LTE Access.

In the implementing procedure of the invention, the applicant found at least following problems in present technique:
There is a lack of appropriate method for addressing in present locating scheme, the correct delivery of the locating information could not be ensured, which affects the improvement of locating technology.

### Contents of the invention

The invention is defined as disclosed in the attached claims.

The basic difference between the present invention and the listed prior art lies in that the prior publications the following important characteristics were not disclosed, namely:
the MME receiving the UE specific message that includes locating identifier, which is transmitted from the E-SMLC, and inquiring corresponding UE context information according to the locating identifier;
the MME communicating with the device of a base station based on the inquired UE context information, constructing the Location Services Application Protocol (LCS AP) message that carries the relationship identifier according to the communicating content and the UE context information, and transmitting the LCS AP message to the E-SMLC.

### BRIEF DESCRIPTION OF THE DRAWINGS

FIG. 1 illustrates the framework of locating which relates to E-UTRAN in present technology;
FIG.2 illustrates the relationship between the interfaces of LPP stack in mobile locating technology;
FIG.3 illustrates the relationship between the interfaces of LPPa stack in mobile locating technology;
FIG. 4 is a schematic flow of a locating method in the embodiment 1 of the invention;
FIG. 5 is a schematic flow of a locating method in the embodiment 2 of the invention;
FIG. 6 is a schematic flow of a locating method in the embodiment 3 of the invention;
FIG. 7 is a schematic flow of a locating method in the embodiment 4 of the invention;
FIG. 8 illustrates the structure of a MME in the embodiment 5 of the invention;
FIG. 9 illustrates the structure of a MME in the embodiment 6 of the invention;
FIG. 10 illustrates the structure of a locating system in the embodiment 7 of the invention.

### MODE OF CARRYING OUT THE INVENTION

In the technical proposal provided by the embodiments of the invention, after received locating service request, MME selecting E-SMLC, allocating locating identifier to the selected E-SMLC, transmitting the locating service request which including this locating identifier to the E-SMLC, so that the E-SMLC establishing locating context information and allocating relationship identifier for this locating context information. MME receiving the UE specific message from E-SMLC, in which includes relationship identifier, communicating locating information with E-SMLC through this relationship identifier, in order to realize locating.

Blow the technical proposal of the invention would be described clearly and completely with the figures of the invention, obviously, the embodiments in the following description are only some embodiments of the invention, which are not all the embodiments. According to the embodiments of the invention, all the other embodiments which are obtained by the technical personnel in this field without paying creative labor, are in the protection range of the invention.

As is shown in FIG.4, a locating method in the embodiment 1 of the invention, comprising following steps:
Step 101, MME receiving locating service request, selecting E-SMLC, allocating locating identifier to the selected E-SMLC, transmitting the locating service request which including this locating identifier to the E-SMLC, so that the E-SMLC establishing locating context information and allocating relationship identifier for this locating context information.

Therein, the locating service request received by MME could be from client, and the network element from core network as well, such as GMLC. The locating identifier which allocated from MME to E-SMLC includes user identifier and session identifier. The user identifier is for distinguishing different users, it could be temporary identifier of UE, as well as perpetual identifier, such as S-TMSI (SAE Temporary Mobile Subscriber Identifier) or IMSI (International Mobile Subscriber Identity); the session identifier is for distinguishing different locating needs for the same user. E-SMLC receiving the locating service request that includes locating identifier, obtaining the locating identifier, and using the locating identifier during subsequent interactive process with MME.

Step 102, MME receiving the UE specific message from E-SMLC, in which includes relationship identifier, communicating locating information with E-SMLC through this relationship identifier, in order to realize locating.

Specifically, after E-SMLC allocated relationship identifier for locating context information, the relationship identifier is carried in the UE specific message that is first transmitted to MME. MME obtaining the relationship identifier, and using the locating identifier during subsequent interactive process with E-SMLC. The identifier could be temporary identifier of UE, as well as perpetual identifier, such as S-TMSI or IMSI.

The advantages of the technical proposal that in the embodiments of the invention is as follows: in the processing of locating service, locating identifier and relationship identifier are allocated by MME and E-SMLC separately, and the locating identifier and the relationship identifier are carried during communicating locating information, the correct delivery of the locating information could be ensured, which solves the problem on addressing in present locating scheme, and further improves the accuracy on locating technology.

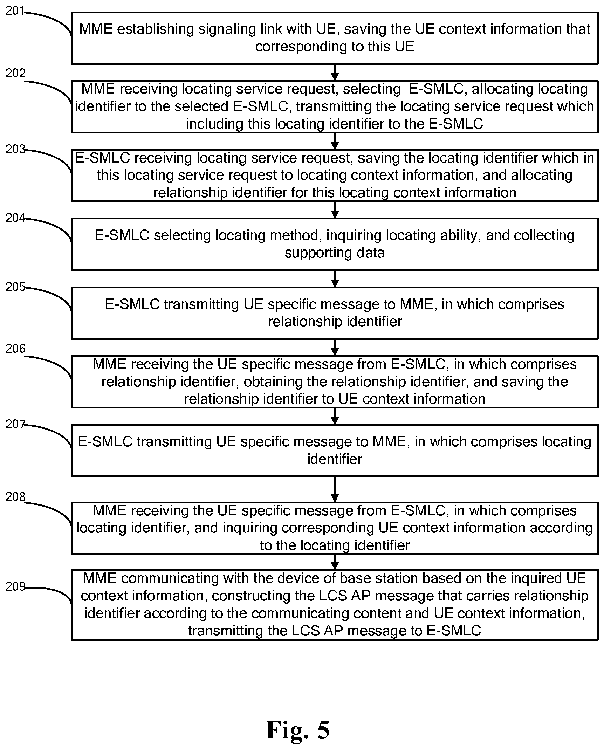

As is shown in FIG.5, a schematic flow of a locating method in the embodiment 2 of the invention, comprising following steps:
Step 201, MME establishing signaling link with UE, saving the UE context information that corresponding to this UE.

Specifically, before or after receiving each locating service request, MME establishing signaling link with UE, saving the context information corresponding to this UE. The context information includes eNodeB UE S1AP ID and MME UE S1AP ID, and the identifier of the cell which initially establishing link, service eNodeB ID and UE temporary identifier S-TMSI and so on.

Step 202, MME receiving locating service request, selecting E-SMLC, allocating locating identifier to the selected E-SMLC, transmitting the locating service request which including this locating identifier to the E-SMLC.

Specifically, the locating identifier allocated by MME is used for establishing relationship with context information of UE, the locating identifier includes user identifier and session identifier, therein the user identifier could be MME LCSAP ID or MME UE LCSAP ID, and the session identifier could be session ID. MME also could save selected E-SMLC information, each specific locating message issued by E-SMLC will carry the locating identifier allocated by MME.

Besides, MME could establish context relationship through the temporary identifier or perpetual identifier of UE, distinguishing different users through carried S-TMSI or IMSI, distinguishing multiple locating service for the same user through carried session ID.

Step 203, E-SMLC receiving locating service request, saving the locating identifier which in this locating service request to locating context information, and allocating relationship identifier for this locating context information.

Specifically, after received the locating needs from MME, E-SMLC saving locating identifier and establishing locating context accordingly, allocating relationship identifier based on each context, the relationship identifier could be ESMLC LCS AP ID.

Step 204, E-SMLC selecting locating method, inquiring locating ability, and collecting supporting data.

Therein, during E-SMLC determining the locating process that relates to user, including the selection of locating method, the inquiring of locating ability and the collection of supporting data, the LPP portal or LPPa portal could be applied.

Step 205, E-SMLC transmitting UE specific message to MME, in which comprises relationship identifier.

Step 206, MME receiving the UE specific message from E-SMLC, in which comprises relationship identifier, obtaining the relationship identifier, and saving the relationship identifier to UE context information.

Therein, LCS AP could define two different processes to support the content of LPP and LPPa or define one process, and distinguishing different portal stack by adding identifier. After saving the relationship identifier to UE context information, MME distinguishing whether the content of LPPa is included based on the different processes of LCS AP or portal identifier.

Step 207, E-SMLC transmitting UE specific message to MME, in which comprises locating identifier.

Step 208, MME receiving the UE specific message from E-SMLC, in which comprises locating identifier, and inquiring corresponding UE context information according to the locating identifier.

Specifically, all the UE specific messages transmitted from E-SMLC to MME need to carry the locating identifier, which saved in locating context. In addition, E-SMLC carries allocated relationship identifier in the UE specific message, which is first returned to MME, the ESMLC LCS AP ID that used by MME on uplink. If E-SMLC establishing context relationship through IMSI, the UE specific message only carries IMSI, in order to distinguish different users.

Step 209, MME communicating with the device of base station based on the inquired UE context information, constructing the LCS AP message that carries relationship identifier according to the communicating content and UE context information, transmitting the LCS AP message to E-SMLC.

It should be noted that the order of each step in the embodiments of the invention could be adjusted according to practical necessity.

The advantages of the technical proposal that in the embodiments of the invention is as follows: in the processing of locating service, locating identifier and relationship identifier are allocated by MME and E-SMLC separately, and the locating identifier and the relationship identifier are carried during communicating locating information, the correct delivery of the locating information could be ensured, which solves the problem on addressing in present locating scheme, and further improves the accuracy on locating technology.

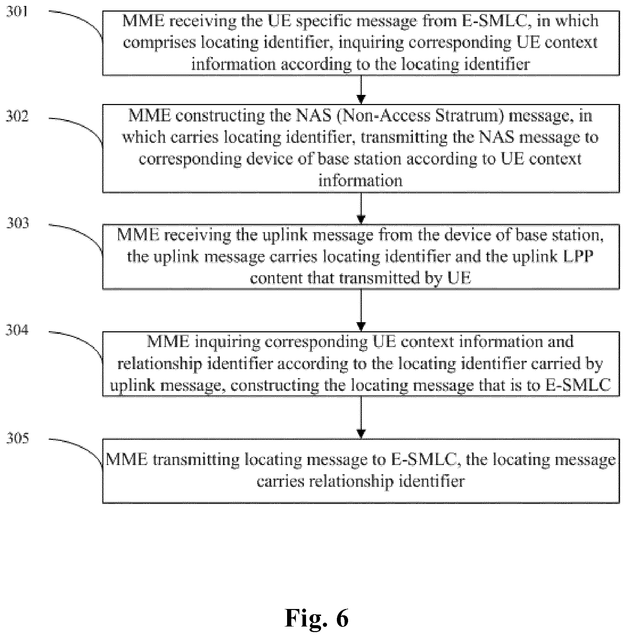

As is shown in FIG.6, a schematic flow of a locating method in the embodiment 3 of the invention, which is corresponding to LPP process, comprising following steps:
Step 301, MME receiving the UE specific message from E-SMLC, in which comprises locating identifier, inquiring corresponding UE context information according to the locating identifier.
Step 302, MME constructing the NAS (Non-Access Stratrum) message, in which carries locating identifier, transmitting the NAS message to corresponding device of base station according to UE context information.

Specifically, MME constructing NAS PDU (Packet Data Unit), and carrying the NAS PDU in the DOWNLINK NAS TRANSPORT message of S1 port. In order to distinguish different locating service for the same user, MME LCSAP ID or session ID information also should be also carried in NAS message at the same time.

Step 303, MME receiving the uplink message from the device of base station, the uplink message carries locating identifier and the uplink LPP content that transmitted by UE.

Specifically, if UE needs to transmit uplink LPP content, the base station will use the UPLINK NAS TRANSPORT message of S1 port to carry the NAS PDU which includes uplink LPP content, and MME LCSAP ID or session ID information.

Step 304, MME inquiring corresponding UE context information and relationship identifier according to the locating identifier carried by uplink message, constructing the locating message that is to E-SMLC.

Specifically, after being received UPLINK NAS TRANSPORT message, MME determining the corresponding UE context based on the MME UE S1AP ID identifier, then making the corresponding locating service clear according to MME LCSAP ID or session ID information, constructing the locating message that is to E-SMLC, ESMLC LCS AP ID could be included in the locating message, so E-SMLC could identify different locating service. The above UPLINK NAS TRANSPORT message could include IMSI in order to distinguish different users, carrying session ID to distinguishing multiple locating service for the same user.

Step 305, MME transmitting locating message to E-SMLC, the locating message carries relationship identifier.

It should be noted that the order of each step in the embodiments of the invention could be adjusted according to practical necessity.

The advantages of the technical proposal that in the embodiments of the invention is as follows: in the processing of locating service, locating identifier and relationship identifier are allocated by MME and E-SMLC separately, and the locating identifier and the relationship identifier are carried during communicating locating information, the correct delivery of the locating information could be ensured, which solves the problem on addressing in present locating scheme, and further improves the accuracy on locating technology.

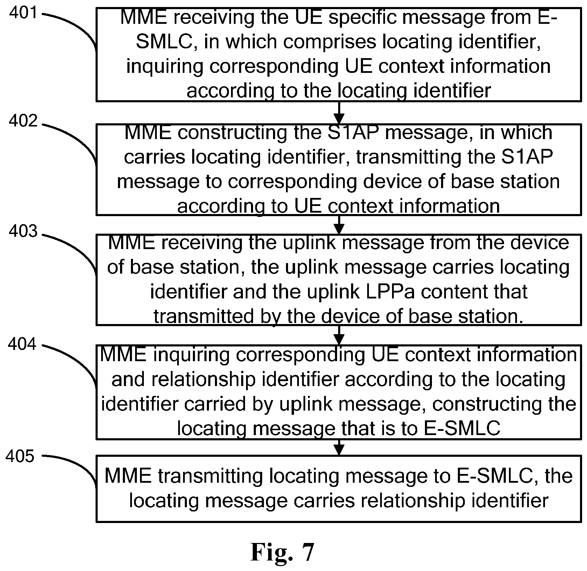

As is shown in FIG.7, a schematic flow of a locating method in the embodiment 4 of the invention, which is corresponding to LPPa process, comprising following steps:
Step 401, MME receiving the UE specific message from E-SMLC, in which comprises locating identifier, inquiring corresponding UE context information according to the locating identifier.
Step 402, MME constructing the S1AP message, in which carries locating identifier, transmitting the S1AP message to corresponding device of base station according to UE context information.

Specifically, MME constructing corresponding S1AP message, the S1AP message includes eNB UE S1AP ID and MME UE S1AP ID. In order to distinguish different locating service for the same user, MME LCSAP ID or session ID message is needed to be carried in message as well.

Step 403, MME receiving the uplink message from the device of base station, the uplink message carries locating identifier and the uplink LPPa content that transmitted by the device of base station.

Specifically, after being received S1AP message that includes locating needs, the device of base station performing locating measurement according to the locating needs, and carrying measurement result and locating identifier through the LPPa PDU of uplink message during S1AP response process.

Step 404, MME inquiring corresponding UE context information and relationship identifier according to the locating identifier carried by uplink message, constructing the locating message that is to E-SMLC.

After being received uplink message, MME determining the corresponding UE context based on the MME UE S1AP ID identifier, making the corresponding locating service clear according to MME LCSAP ID or session ID information, obtaining the corresponding ESMLC LCS AP ID based on UE context, and determining the corresponding E-SMLC, constructing the locating message that is to the E-SMLC, ESMLC LCS AP ID is included in the locating message, so E-SMLC could identify different locating service. The above uplink message could include IMSI in order to distinguish different users, carrying session ID to distinguishing multiple locating service for the same user.

Step 405, MME transmitting locating message to E-SMLC, the locating message carries relationship identifier.

Specifically, after being received the locating message that carries ESMLC LCS AP ID, E-SMLC determining the corresponding locating context based on ESMLC LCS AP ID, performing locating estimating, and transmitting the locating results to MME, meanwhile, deleting the corresponding locating context. MME will also delete the relationship between locating context and UE context at the same time.

It should be noted that the order of each step in the embodiments of the invention could be adjusted according to practical necessity.

The advantages of the technical proposal that in the embodiments of the invention is as follows: in the processing of locating service, locating identifier and relationship identifier are allocated by MME and E-SMLC separately, and the locating identifier and the relationship identifier are carried during communicating locating information, the correct delivery of the locating information could be ensured, which solves the problem on addressing in present locating scheme, and further improves the accuracy on locating technology.

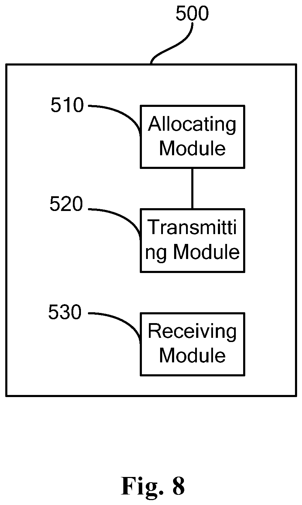

As is shown in FIG.8, the structure diagram of a MME in the embodiment 5 of the invention, the MME 500 comprising:
Allocating Module 510 for receiving locating service request, selecting E-SMLC, and transmitting locating identifier to the said selected E-SMLC.
Transmitting Module 520 for transmitting the locating service request which includes the locating identifier allocated by Allocating Module 510 to the said E-SMLC, so the said E-SMLC establishing locating context information according to the said locating identifier and allocating relationship identifier for the said locating context information.
Receiving Module 530 for receiving user equipment (UE) specific message that includes relationship identifier from the said E-SMLC, communicating locating information with the said E-SMLC by using the said relationship identifier.

The advantages of the technical proposal that in the embodiments of the invention is as follows: in the processing of locating service, locating identifier and relationship identifier are allocated by MME and E-SMLC separately, and the locating identifier and the relationship identifier are carried during communicating locating information, the correct delivery of the locating information could be ensured, which solves the problem on addressing in present locating scheme, and further improves the accuracy on locating technology.

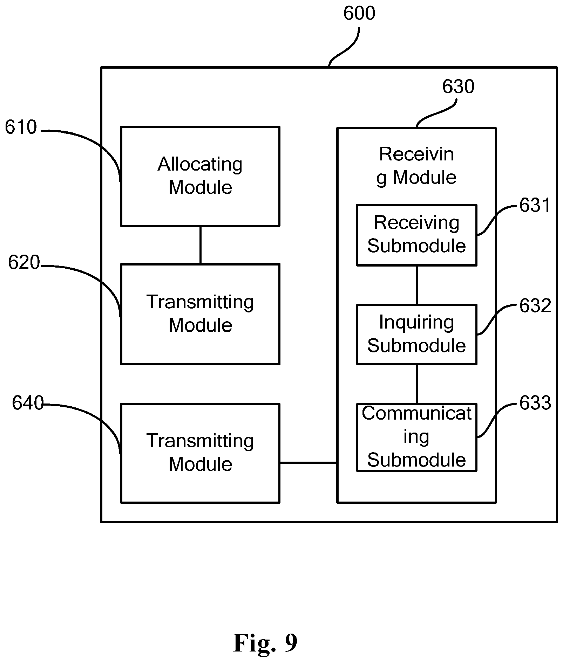

As is shown in FIG.9, the structure diagram of a MME in the embodiment 6 of the invention, the MME 600 comprising:
Allocating Module 610 for receiving locating service request, selecting E-SMLC, and transmitting locating identifier to the said selected E-SMLC.
Transmitting Module 620 for transmitting the locating service request which includes the locating identifier allocated by Allocating Module 610 to the said E-SMLC, so the said E-SMLC establishing locating context information according to the said locating identifier and allocating relationship identifier for the said locating context information.
Receiving Module 630 for receiving user equipment (UE) specific message that includes relationship identifier from the said E-SMLC, communicating locating information with the said E-SMLC by using the said relationship identifier.

Shortage Module 640 for establishing signaling link with UE, saving the UE context information that corresponding to the said UE.

The Shortage Module 640 also for obtaining the relationship identifier carried by the UE specific messages, which are received by the Receiving Module 630, and saving the said relationship identifier to the said UE context information.

The Receiving Module 630 above specifically comprising:
Receiving Submodule 631 for receiving the UE specific message that includes relationship identifier and locating identifier from the said E-SMLC.
Inquiring Submodule 632 for inquiring corresponding UE context information according to the locating identifier carried by UE specific message, which is received by the said Receiving Submodule 631.
Communicating Submodule 633 for communicating with the device of base station based on the UE context information that inquired by the said Inquiring Submodule 632, and constructing the LCA AP that carries relationship identifier according to the communicating content and the said UE context information, transmitting the said LCS AP message to the said E-SMLC.

The Communicating Submodule 633 above specifically for constructing the Non-Access Stratrum (NAS) message, in which carries locating identifier, transmitting the said NAS message to the corresponding device of base station according to the said UE context information; receiving the uplink message from the said device of base station, the said uplink message carries the said locating identifier and the uplink LPP content that transmitted by UE, constructing the LCS AP message that carries relationship identifier according to the said uplink LPP content and the said UE context information, transmitting the said LCS AP message to the said E-SMLC; or,

Constructing the S1AP message that carries locating identifier, transmitting the said S1AP message to the corresponding device of base station according to the said UE context information; receiving the uplink message from the said device of base station, the said uplink message carries the said locating identifier and the uplink LPPa content that transmitted by the said device of base station, constructing the LCS AP message that carries relationship identifier according to the said uplink LPPa content and the said UE context information, transmitting the said LCS AP message to the said E-SMLC.

The advantages of the technical proposal that in the embodiments of the invention is as follows: in the processing of locating service, locating identifier and relationship identifier are allocated by MME and E-SMLC separately, and the locating identifier and the relationship identifier are carried during communicating locating information, the correct delivery of the locating information could be ensured, which solves the problem on addressing in present locating scheme, and further improves the accuracy on locating technology.

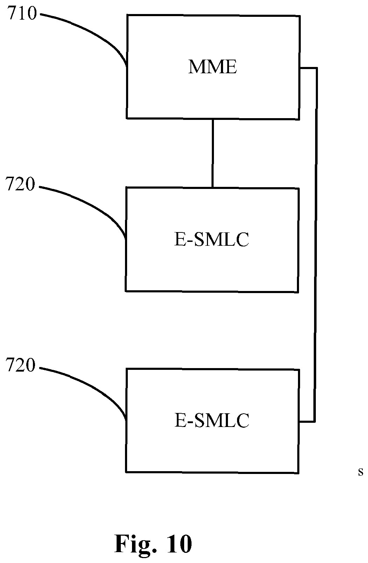

As is shown in FIG. 10, the structure diagram of a locating system in the embodiment 7 of the invention, comprising:
MME 710 for receiving locating service request, selecting E-SMLC 720, and allocating locating identifier for the said selected E-SMLC 720, transmitting the locating service request that includes the said locating identifier to the said E-SMLC 720, receiving the UE specific message that includes relationship identifier from the said E-SMLC 720, communicating locating information with the said E-SMLC 720 by using the said relationship identifier.
E-SMLC 720 for receiving the locating service request from MME 710, saving the locating identifier which in the said locating service request to the said locating context information, and allocating relationship identifier for the said locating context information , transmitting the UE specific messages that include the said locating identifier and/or the said relationship identifier to the said MME 710.

The advantages of the technical proposal that in the embodiments of the invention is as follows: in the processing of locating service, locating identifier and relationship identifier are allocated by MME and E-SMLC separately, and the locating identifier and the relationship identifier are carried during communicating locating information, the correct delivery of the locating information could be ensured, which solves the problem on addressing in present locating scheme, and further improves the accuracy on locating technology.

Through the description of the embodiments above, the technical personnel in this field can understand clearly that the present invention can be implemented by hardware or software and necessary current hardware platform. Based on this understanding, the technical program of the present invention can be embodied by a form of software products which can be stored in a nonvolatile storage medium (such as CD-ROM, U disk, mobile hard disk, etc.), including a number of instructions for making a computer device (such as personal computers, servers, or network equipments, etc.) implement the methods described in the embodiments of the present invention.

The descriptions above are just preferred implement ways of the invention, it should be noted that the improvements and the embellishments within the scope of the tenets of the invention shall be within the protection range of the invention to the technical personnel in this field.

The technical personnel in this field can be understood that the illustration is only schematic drawings of a preferred embodiment, and the module or process is not necessary for the implementation of the present invention.

The technical personnel in this field can be understood that the modules can be distributed in device of the embodiments according to the description of the embodiments above, and also can be varied in one or multiply device of the embodiments. The modules of the embodiments can be combined into a module, and also can be further split into several sub-modules.

The number of the embodiments is only to describe, it does not represent the pros and cons of the embodiments.

The descriptions above are just preferred implement ways of the present invention. It should be pointed that, for general technical personnel in this field, some improvement and decorating can be done, which should be as the protection scope of the present invention.

## Claims

1. A locating method, comprising:
Mobility Management Entity (MME) receiving locating service request, selecting Enhanced Serving Mobile Location Center (E-SMLC), allocating a locating identifier for the selected E-SMLC, and transmitting the locating service request which includes the locating identifier to the selected E-SMLC;
the MME receiving a user equipment (UE) specific message that includes the locating identifier, which is transmitted from the E-SMLC, and communicating locating information with the E-SMLC by using the locating identifier; wherein,
after the MME transmitting the locating service request which includes locating identifier to the selected E-SMLC, the method further comprising:
the E-SMLC saving the locating identifier which is in the locating service request to a locating context information, and allocating a relationship identifier for the locating context information;
the E-SMLC selecting locating method, inquiring locating ability, and collecting supporting data;
the step of MME receiving the user equipment (UE) specific message that includes the locating identifier, which is transmitted from the E-SMLC, comprising:
the E-SMLC transmitting the UE specific message that includes the locating identifier and the relationship identifier to the MME;
wherein the step of the MME communicating locating information with the E-SMLC by using the locating identifier, specifically comprising:
the MME receiving the UE specific message that includes locating identifier, which is transmitted from the E-SMLC, and inquiring corresponding UE context information according to the locating identifier;
the MME communicating with the device of base station based on the inquired UE context information, constructing the Location Services Application Protocol (LCS AP) message that carries the relationship identifier according to the communicating content and the UE context information, and transmitting the LCS AP message to the E-SMLC.

2. The method according to claim 1, further comprising:
the MME establishing signaling link with UE, and saving the UE context information corresponding to the UE.

3. The method according to claim 2, wherein after the MME receiving the UE specific message that includes locating identifier, which is transmitted from the E-SMLC, the method further comprising:
the MME obtaining the relationship identifier, and saving the relationship identifier to the UE context information.

4. The method according to claim 1, wherein the step of the MME communicating with the device of base station based on the inquired UE context information, specifically comprising:
the MME constructing the Non-Access Stratrum (NAS) message, in which carries locating identifier, transmitting the NAS message to the corresponding device of base station according to the UE context information; and receiving the uplink message from the device of base station, the uplink message carries the locating identifier and the uplink LPP content that transmitted by UE; or,
the MME constructing the S1AP message, in which carries locating identifier, transmitting the S1AP message to the corresponding device of base station according to the UE context information; and receiving the uplink message from the device of base station, the uplink message carries the locating identifier and the uplink LPPa content that transmitted by the device of base station.

5. The method according to claim 1, wherein the locating identifier including user identifier, the user identifier is a temporary identifier of UE or a perpetual identifier of UE.

6. The method according to claim 1, wherein the relationship identifier is a temporary identifier of UE or a perpetual identifier of UE.

7. A locating system, comprising:
a MME, configured to
receive locating service request,
select a E-SMLC,
allocate a locating identifier for the selected E-SMLC,
transmit the locating service request that includes the locating identifier to the E-SMLC,
receive the UE specific message that includes a relationship identifier from the E-SMLC, and
communicate locating information with the E-SMLC by using the relationship identifier;
wherein the MME is further configured to
inquire a corresponding UE context information according to the locating identifier carried by the UE specific message,
communicate with the device of a base station based on the UE context information,
construct the LCS AP that carries the relationship identifier according to the communicating content and the UE context information, and transmit the LCS AP message to the E-SMLC; and
a E-SMLC, configured to
receive the locating service request from the MME,
save the locating identifier which is in the locating service request to a locating context information,
select a locating method,
inquire a locating ability, and
collect supporting data,
**characterized in that** the E-SMLC is further configured to
allocate a relationship identifier for the locating context information, and
transmit the UE specific messages that include the locating identifier and the relationship identifier to the MME.

## Patentansprüche

1. Ortungsverfahren, umfassend:
eine Mobilitätsmanagementeinheit (MME), die eine Ortungsdienstanforderung empfängt, Auswählen eines erweiterten mobilen Dienstortungszentrums (E-SMLC), Zuweisen einer Ortungskennung für das ausgewählte E-SMLC und Übertragen der Ortungsdienstanforderung, die die Ortungskennung enthält, an das ausgewählte E-SMLC;
die MME, die eine Benutzergerät (UE) spezifische Nachricht empfängt, die die Ortungskennung umfasst, die von dem E-SMLC übertragen wird, und die Ortungsinformation an das E-SMLC unter Verwendung der Ortungskennung übermittelt;
wobei
das Verfahren nach dem Übertragen der Ortungsdienstanforderung durch die MME, die eine Ortungskennung an das ausgewählte E-SMLC umfasst, ferner umfasst:
das E-SMLC, das die Ortungskennung speichert, die in der Ortungsdienstanforderung an eine Ortungskontextinformation enthalten ist, und das eine Verknüpfungskennung für die Ortungskontextinformation zuteilt;
das E-SMLC, das das Ortungsverfahren auswählt, die Ortungsfähigkeit abfragt und unterstützende Daten sammelt;
den Schritt des Empfangens der Benutzergerät (UE) spezifischen Nachricht durch die MME, die die Ortungskennung umfasst, die von dem E-SMLC übertragen wird, umfassend:
das E-SMLC übermittelt die UE spezifische Nachricht, die die Ortungskennung und die Verknüpfungskennung umfasst, an die MME;
wobei der Schritt der MME, die eine Ortungsinformation mit dem E-SMLC unter Verwendung der Ortungskennung übermittelt, insbesondere umfasst:
die MME empfängt die UE spezifische Nachricht, die eine Ortungskennung umfasst, die vom E-SMLC übertragen wird, und die entsprechende UE Kontextinformation gemäß der Ortungskennung abfragt;
die MME kommuniziert mit der Vorrichtung der Basisstation basierend auf der angeforderten UE Kontextinformation, die die Ortungsdienste-Applikationsprotokoll (LCS AP) Nachricht erstellt, die die Verknüpfungskennung gemäß dem Kommunikationsinhalt und der UE Kontextinformation trägt, und die LCS AP Nachricht an das E-SCLM übermittelt.

2. Verfahren nach Anspruch 1, ferner umfassend:
die MME, die eine Signalverbindung mit dem UE herstellt, und Speichern der UE Kontextinformation, die dem UE entsprechen.

3. Verfahren nach Anspruch 2, wobei das Verfahren nach dem Empfangen der UE spezifischen Nachricht durch die MME, die eine Ortungskennung umfasst, die von dem E-SMLC übertragen wird, ferner umfasst:
die MME erhält die Verknüpfungskennung und speichert die Verknüpfungskennung zu der UE Kontextinformation.

4. Verfahren nach Anspruch 1, wobei der Schritt der MME, die mit der Vorrichtung der Basisstation basierend auf der angeforderten UE Kontextinformation kommuniziert, insbesondere umfasst:
die MME, die die Nichtzugriffs Stratrum (NAS) Nachricht erstellt, die eine Ortungskennung trägt, übermittelt die NAS-Nachricht gemäß der UE Kontextinformation an die entsprechende Vorrichtung der Basisstation; und Empfangen der Uplink-Nachricht von der Vorrichtung der Basisstation, wobei die Uplink-Nachricht die Ortungskennung und den Uplink-LPP-Inhalt trägt, der von der UE übertragen wurde; oder,
die MME, die die S1AP-Nachricht erstellt, die eine Ortungskennung trägt, sendet die S1AP-Nachricht gemäß der UE Kontextinformation an die entsprechende Vorrichtung der Basisstation; und empfängt die Uplink-Nachricht von der Vorrichtung der Basisstation, die Uplink-Nachricht trägt die Ortungskennung und den Uplink-LPPa-lnhalt, der von der Vorrichtung der Basisstation übertragen wird.

5. Verfahren nach Anspruch 1, wobei die Ortungskennung eine Benutzerkennung umfasst, wobei die Benutzerkennung eine temporäre Kennung des UE oder eine fortlaufende Kennung des UE ist.

6. Verfahren nach Anspruch 1, wobei die Verknüpfungskennung eine temporäre Kennung des UE oder eine fortlaufende Kennung des UE ist.

7. Ortungssystem, umfassend:
eine MME, ausgelegt zum
Empfangen einer Ortungsanforderung,
Auswählen eines E-SMLC,
Zuteilen einer Ortungskennung für das ausgewählte E-SMLC,
Übertragen der Ortungsdienstanforderung, die die Ortungskennung umfasst, an das E-SMLC,
Empfangen der UE spezifischen Nachricht, die eine Verknüpfungskennung vom E-SMLC umfasst, und
Kommunizieren von Ortungsinformation mit dem E-SMLC unter Verwendung der Verknüpfungskennung;
wobei die MME ferner ausgelegt ist zum
Abfragen einer entsprechenden UE Kontextinformation gemäß der Ortungskennung, die von der UE spezifischen Nachricht getragen wird,
Kommunizieren mit der Vorrichtung einer Basisstation basierend auf der UE Kontextinformation,
Erstellen des LCS AP, das die Verknüpfungskennung gemäß dem Kommunikationsinhalt und der UE Kontextinformation trägt, und Übertragen der LCS AP Nachricht an das E-SMLC; und
ein E-SMLC, ausgelegt zum
Empfangen der Ortungsdienstanforderung von der MME,
Speichern der Ortungskennung, die in der Ortungsdienstanforderung zu einer Ortungskontextinformation ist,
Auswählen eines Ortungsverfahrens,
Abfragen einer Ortungsfähigkeit und
Sammeln von unterstützenden Daten,
**dadurch gekennzeichnet, dass** das E-SMLC ferner ausgelegt ist zum
Zuteilen einer Verknüpfungskennung für die Ortungskontextinformation und
Übertragen der UE spezifischen Nachrichten, die die Ortungskennung und die Verknüpfungskennung umfassen, an die MME.

## Revendications

1. Procédé de localisation comprenant :
la réception par une entité de gestion de mobilité (MME) d'une requête de service de localisation, la sélection d'un centre de localisation mobile de desserte amélioré (E-SMLC), l'allocation d'un identificateur de localisation pour l'E-SMLC sélectionné, et la transmission de la requête de service de localisation qui inclut l'identificateur de localisation à l'E-SMLC sélectionné ;
la réception par la MME d'un message spécifique à l'équipement utilisateur (UE) qui inclut l'identificateur de localisation, qui est transmis à partir de l'E-SMLC, et la communication d'informations de localisation avec l'E-SMLC en utilisant l'identificateur de localisation ;
dans lequel,
après la transmission par la MME de la requête de service de localisation qui inclut l'identificateur de localisation à l'E-SMLC sélectionné, le procédé comprend en outre :
la sauvegarde par l'E-SMLC de l'identificateur de localisation qui est dans la requête de service de localisation dans une information de contexte de localisation, et l'allocation d'un identificateur de relation pour l'information de contexte de localisation ;
la sélection par l'E-SMLC d'un procédé de localisation, la recherche d'une capacité de localisation et la collecte de données de support ;
l'étape de réception par la MME du message spécifique à l'équipement utilisateur (UE) qui inclut l'identificateur de localisation, qui est transmis à partir de l'E-SMLC, comprenant :
la transmission par l'E-SMLC du message spécifique à l'UE qui inclut l'identificateur de localisation et l'identificateur de relation à la MME ;
dans lequel l'étape de communication par la MME d'informations de localisation avec l'E-SMLC en utilisant l'identificateur de localisation, comprend spécifiquement :
la réception par la MME du message spécifique à l'UE qui inclut l'identificateur de localisation, qui est transmis à partir de l'E-SMLC, et la recherche d'une information de contexte d'UE correspondante en fonction de l'identificateur de localisation ;
la communication de la MME avec le dispositif de station de base sur l'information de contexte d'UE recherchée, la construction du message de protocole d'application de services de localisation (LCS AP) qui transporte l'identificateur de relation en fonction du contenu de communication et de l'information de contexte d'UE, et la transmission du message LCS AP à l'E-SMLC.

2. Procédé selon la revendication 1, comprenant en outre :
l'établissement par la MME d'une liaison de signalisation avec l'UE, et la sauvegarde de l'information de contexte d'UE correspondant à l'UE.

3. Procédé selon la revendication 2, dans lequel, après la réception par la MME du message spécifique à l'UE qui inclut identificateur de localisation, qui est transmis à partir de l'E-SMLC, le procédé comprend en outre :
l'obtention par la MME de l'identificateur de relation, et la sauvegarde de l'identificateur de relation dans l'information de contexte d'UE.

4. Procédé selon la revendication 1, dans lequel l'étape de communication de la MME avec le dispositif de station de base sur la base de l'information de contexte d'UE recherchée, comprend spécifiquement :
la construction par la MME du message de couche non d'accès (NAS), dans lequel elle transporte l'identificateur de localisation, la transmission du message NAS au dispositif de station de base correspondant en fonction de l'information de contexte d'UE ; et la réception du message de liaison montante à partir du dispositif de station de base, le message de liaison montante transporte l'identificateur de localisation et le contenu LPP de liaison montante qui est transmis par l'UE ; ou
la construction par la MME du message S1AP, dans lequel elle transporte l'identificateur de localisation, la transmission du message S1AP au dispositif de station de base correspondant en fonction de l'information de contexte d'UE ; et la réception du message de liaison montante à partir du dispositif de station de base, le message de liaison montante transporte l'identificateur de localisation et le contenu LPPa de liaison montante qui est transmis par le dispositif de station de base.

5. Procédé selon la revendication 1, dans lequel l'identificateur de localisation inclut un identificateur d'utilisateur, l'identificateur d'utilisateur est un identificateur temporaire d'UE ou un identificateur permanent d'UE.

6. Procédé selon la revendication 1, dans lequel l'identificateur de relation est un identificateur temporaire d'UE ou un identificateur permanent d'UE.

7. Système de localisation comprenant :
une MME configurée pour
recevoir une requête de service de localisation,
sélectionner un E-SMLC,
allouer un identificateur de localisation pour l'E-SMLC sélectionné,
transmettre la requête de service de localisation qui inclut l'identificateur de localisation à l'E-SMLC,
recevoir le message spécifique à l'UE qui inclut un identificateur de relation à partir de l'E-SMLC, et
communiquer des informations de localisation avec l'E-SMLC en utilisant l'identificateur de relation ;
dans lequel la MME est configurée en outre pour
rechercher une information de contexte d'UE correspondante en fonction de l'identificateur de localisation transporté par le message spécifique à l'UE,
communiquer avec le dispositif d'une station de base sur la base de l'information de contexte d'UE,
construire le LCS AP qui transporte l'identificateur de relation en fonction du contenu de communication et de l'information de contexte d'UE, et transmettre le message LCS AP à l'E-SMLC ; et
un E-SMLC configuré pour
recevoir la requête de service de localisation à partir de la MME,
sauvegarder l'identificateur de localisation qui est dans la requête de service de localisation dans une information de contexte de localisation,
sélectionner un procédé de localisation,
rechercher une capacité de localisation, et
collecter des données de support,
**caractérisé en ce que** l'E-SMLC est configuré en outre pour
allouer un identificateur de relation pour l'information de contexte de localisation, et
transmettre le message spécifique à l'UE qui inclut l'identificateur de localisation et l'identificateur de relation à la MME.
